# EUROPEAN PATENT SPECIFICATION

(11) **EP 1 830 571 B1**
(45) Date of publication and mention of the grant of the patent: **18.06.2014**
(21) Application number: 07075334.8
(22) Date of filing: 07.03.2005
(51) Int. Cl.: H04N 21/472, H04N 21/431, H04N 21/433, H04N 21/81, H04N 21/8352, H04N 21/845, H04N 21/85, H04N 21/8549, H04N 7/173

(54) **Distribution of video data**
Verteilung von Video Daten
Distribution de donées video

(30) Priority: 10.03.2004 GB 0405340; 13.04.2004 GB 0408124; 22.06.2004 US 873749
(43) Date of publication of application: 05.09.2007
(62) Divisional of application: 05717935.0
(73) Proprietor: Trevor Burke Technology Limited, L3 9QJ (GB)
(72) Inventor: Burke, Trevor John, Deceased (GB)
(74) Representative: Jones, Bruce Graeme Roland

(56) References cited:
- EP-A- 0 705 036
- EP-A- 1 289 292
- EP-A2- 0 597 450
- EP-A2- 1 158 791
- EP-A2- 1 304 874
- WO-A1-00/45388
- US-A1- 2002 056 095
- US-A1- 2005 039 177
- US-B1- 6 647 535

## Description

The present invention relates to a method and apparatus for distributing video data. The invention also relates to a method and apparatus for receiving video data, a method and apparatus for presenting video data, and a method and apparatus for generating video data.

Video data is currently distributed in a variety of different ways. For example, video data is transmitted in the form of broadcast television programmes which are received by a user and displayed using a television receiver. In recent times, such television programmes have been distributed by means of satellite transmissions and cable lines, in addition to more traditional radio frequency transmissions. Furthermore, it is well known to distribute recorded video data on storage media such as video cassettes and Digital Versatile Disks (DVDs)

Recently, the Internet has increasingly been associated with the distribution of video data. Software to display video data is readily available for conventional personal computers, but many users suffer from problems of bandwidth. For example, users connecting to the Internet via a modem and a dialup connection to an Internet Service Provider experience low data transmission rates, making real-time video very difficult to achieve, with displayed video having artefacts of "jerkiness" which is most disconcerting to a user, and impairs enjoyment of the video data. Similar problems exist when a mobile device such as a mobile telephone or handheld computer is used to access video data. Given these problems, many users download an entire broadcast, and then watch the downloaded broadcast. This is again disadvantageous, because this downloading can typically take many minutes to complete.

Even users using high bandwidth connections (generally known as "broadband" connections) can still encounter problems when high quality video data is involved, with the undesirable effects described above being experienced.

US 6,647,535 (Xerox Corporation) describes a system for creating a storyboard from video data. The storyboard comprises a plurality of still images which are representative or key frames taken from the video data..The selected still images can then be displayed to a user by means of an Internet webpage, and a user can select one of the still, images to cause a video clip associated with that image to be downloaded and displayed. Although this proposal provides a way of encapsulating a video clip by means of a relatively small number of still images, it suffers from some disadvantages. For example, using still images taken from the video data will not necessarily provide a meaningful and easily understandable indicator of the programme content of the associated video data.

EP 1289292 discloses a method for generating a programme for presentation to a user such that the presented programme is made up from a sequence of programme elements each of which is a programme clip taken from at least one distributed programme and each of which represents an event. EP597450 discloses a system for generating a digest of moving image which generates a moving image having a plurality of frames, generates an operation signal in response to an input received by the generating section during the generating of the moving image, assigning a priority to each of the plurality of frames, selecting at least one image of the plurality based on the priority and outputting the at least one image selected. WO 00/45388 discloses a method of providing multiple levels of digest streams for multimedia content with a small additional storage using a multiple level digest segment information scheme.

The present invention provides a method as set out in claim 1 and an apparatus as set out in claim 16.

By defining a plurality of programme elements, and allocating each programme element to a class having an associated icon, distributed video data can be represented by a series of icons arranged in temporal order of the associated programme elements in the video data. Using icons associated with predetermined classes provides a method of presenting a user with a structured and easily recognised summary of a video clip, with each icon being easily identifiable.

At least some of said plurality of classes may represent a type of event, a programme element may be allocated to one of the plurality of classes on the basis of an event to which the video clip relates. At least some of said plurality of classes may represent a subjective assessment of the value of programme elements and a programme element may be allocated to one of the plurality of classes on the basis of a subjective assessment of value. For example a subject of assessment value may be measured on a scale extending from a low value to a high value.

The icons may be arranged in an order corresponding to a temporal order of the programme elements represented by the icons.

The term "distributed programme" is used herein to mean a video clip which is made available to a user, for example by broadcasting or on a data carrier such as a video tape or DVD and which is described in a schedule (in the case of broadcast material) or on packaging (in the case of a data carrier) to enable a user to access the clip. A plurality of programme elements may be defined within a single distributed programme. The plurality of icons, preferably arranged in temporal order may then collectively represent said distributed programme.

Transmitting data associated with the or each programme element associated with the user selection data to the receiver may comprise transmitting the or each programme element to the receiver.

At least one of said programme elements may comprise a plurality sub-elements, each sub-element may be allocated to one of a predetermined plurality of sub-classes, and the method may further comprise transmitting a further plurality of icons to the receiver in response to selection of an icon associated with the said at least one programme element, each further icon representing a class to which a respective one of said plurality of sub-elements is allocated. Selection data indicative of a user selection of at least one icon corresponding to one of said sub-elements is received, and data associated with the or each sub-element associated with said selection data is transmitted to the receiver. Transmitting data may comprise transmitting data from a server to a remote client. Data representing icons may be transmitted from the server to the remote client. Alternatively, the method may comprise transmitting a plurality of classification codes, each classification code being associated with an icon, and retrieving icons associated with said plurality of classification codes from a memory at the remote client.

The method of the invention is also useful for extracting highlights from video data. For example, where video data is allocated to classes at least partially on the basis of a subjective value judgement such as interest level, a user can specify that only content of a relatively high interest level is to be viewed. This can be useful where it is desired to view highlights of video data in a shorter time than that occupied by the entire video data. of at least one icon, and receiving video data associated with the or each programme element associated with the icon selected indicated by the second user selection data from the transmitter.

The data representing the plurality of icons may further comprise data indicating the viewing duration of the video data associated with each programme element.

At least one of the sequence of icons and the subset of icons may be presented to the user simultaneously with the video data.

The invention also provides a method of generating video data. The method comprises storing video data as a plurality of programme elements, each programme element being allocated to one of a predetermined plurality of classes. First input data indicating classes of said predetermined plurality of classes which are of interest to a user is received. Second input data indicating an approximate desired viewing duration is also received. Programme elements are retrieved from said stored programme elements in accordance with said first input data, to generate video data having a viewing duration substantially equal to the desired viewing duration. The first input data may further indicate a degree of interest in each of the said interested classes. The generated video data may further indicate a degree of interest in each of the said interested classes. The generated video data may comprise programme elements indicated in said first input data as being of relatively high interest. That is, programme elements indicated of being of relatively high interest may be included in preference to programme elements indicated as being of relatively low interest.

Generating video data in the manner of the present invention allows relatively long duration viewing data to be condensed so as to be viewable within a time available. The condensing may be carried out to include events having a relatively high interest level. A user may specify an ordered list of preferences, indicating a high range of desirability of various video data, and video data of relatively high desirability may be included in preference to video data of lower desirability.

At least some of said predetermined plurality of classes may be at least partially defined by a subjective value assessment measured on a scale extending from a low value to a high value. Programme elements allocated to classes having a relatively to classes having a relatively low subjective value. That is, where subjective value indicates a likely degree of interest of the programme elements generated video data is such that relatively interesting programme material is included.

An identifier identifying the generated video data may be presented. The identifier may comprise a sequence of icons representing the classes to which each received programme element has been allocated. A viewing duration for the generated video data may be displayed.

The invention further provides a method of condensing video data, the video data comprising a plurality of programme elements, each of which has been allocated to one of a predetermined plurality of classes, at least some of said predetermined plurality of classes being at least partially defined by a subjective value assessment measured on a scale extending from a high value to a low value, the method comprising, receiving first user input data indicating a wish to condense the video data, said first user input data comprising data specifying a subj ective value, condensing said video data in accordance with said first user selection data, to produce condensed video data, said condensed video data comprising a subset of said plurality of programme elements having a subjective value not less than the specified subjective value.

A first identifier identifying the stream of video data may be displayed. The condensed video data may be displayed. A second identifier identifying said condensed video data may be displayed before said condensed video data is displayed.

The invention allows video data to be condensed to generate video data having a particular approximate duration such that programme elements of relatively high interest are included in preference to programme elements having a relatively low interest.

It will be appreciated that the methods of presenting video data, and the method of generating video data described above can be carried out either locally at a client terminal, or alternatively in a distributed manner whereby the client communicates with a remote server, and it is the remote server which carries out the condensing. The implementation of such distributed embodiments of the invention will be readily apparent to one skilled in the art.

According to the present invention as defined by the claims, the method of generating condensed video data is performed in said distributed manner.

Embodiments of the present invention will now be described, by way of example, with reference to the accompanying drawings, in which:
Figure 1 is a schematic illustration of a computer network suitable for implementing an embodiment of the present invention;
Figure 2 is a flow chart showing a video classification and distribution process in accordance with an embodiment of the present invention;
Figure 3 is a schematic illustration of video data classified using the process of Figure 2;
Figure 4 is an illustration of icons representing the classification illustrated in Figure 3;
Figure 5 is a flow chart showing a video receiving and displaying process in accordance with an embodiment of the present invention, which is suitable for using with the classification and distribution process of Figure 2;
Figure 6 is a schematic illustration of a class hierarchy which can be used for classification in accordance with an embodiment of the present invention;
Figure 7 is an illustration of icons representing a hierarchical classification in accordance with the present invention;
Figure 8 is an illustration of icons representing a soccer match;
Figure 9 is an illustration showing a subset of the icons of Figure 8; and
Figure 10 is an illustration of a display screen which can be used in embodiments of the present invention.

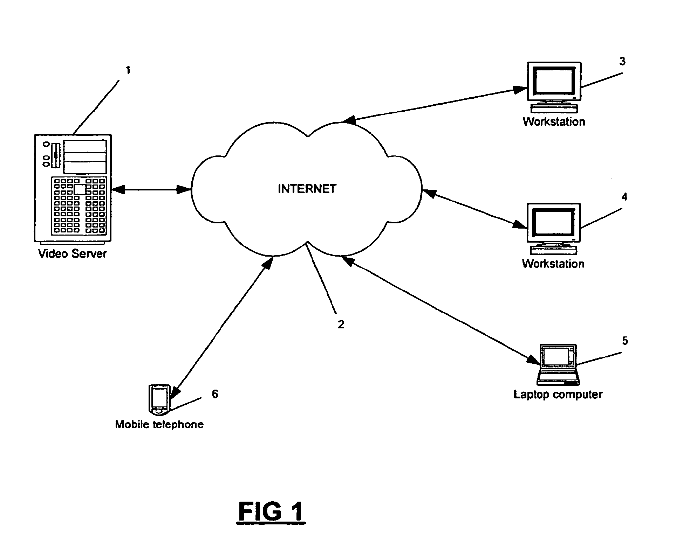

Referring to Figure 1, there is illustrated a video server 1 connected to the Internet 2. Two workstations 3, 4, a laptop computer 5 and a mobile telephone 6 are also provided with means for connection to the Internet 2. The workstations 3, 4 and the laptop computer 5 can be connected to the Internet 2 via a modem and telephone line (not shown), or alternatively via a connection to a local area network (LAN) which is itself connected to the Internet 2. The mobile telephone 6 can be connected to the Internet 2 either by means of a dialup connection using the Wireless Application Protocol (WAP) or alternatively the mobile telephone 6 can be a third generation mobile telephone with Internet access capability. Indeed each of the user devices 3, 4, 5, 6 can be connected to the Internet 2 in any one of a number of ways which will be readily understood by one of ordinary skill in the art.

A user using the mobile telephone 6 can use web browser software installed on the mobile telephone to access a web page defined in the HTML language provided by the video server 1. The web page suitably includes options allowing the user of the mobile telephone 6 to view video data stored on the video server 1 using suitable video player software installed on the mobile telephone 6. The video data stored on the video server 1 has, in accordance with an embodiment of the invention, been classified as is now described.

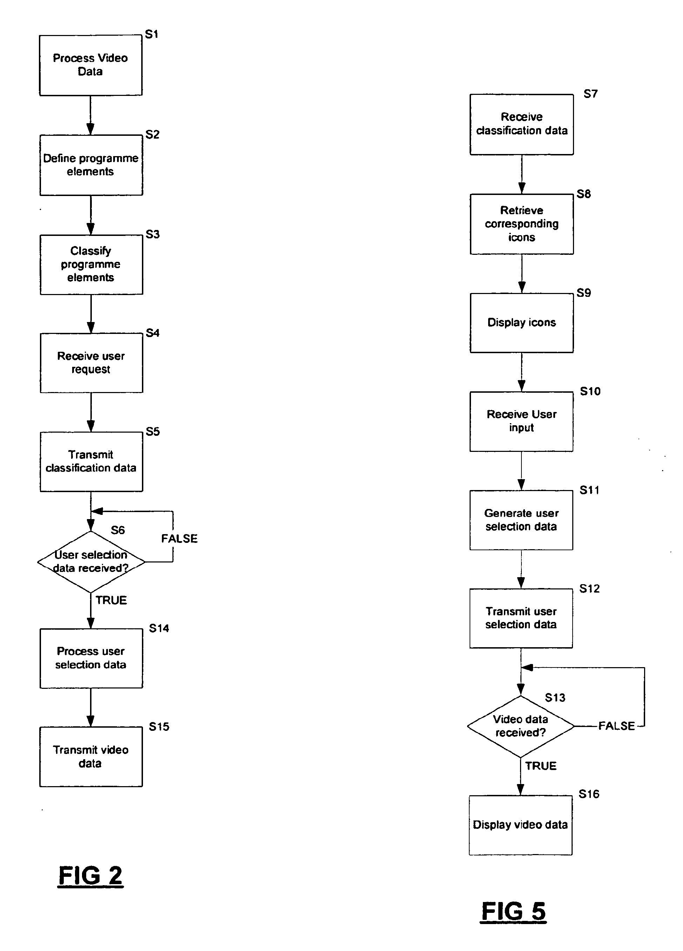

Figure 2 is a flow chart of a classification process for video data which may be carried out by a user of the video server 1. A user processes video data at step S1, and a plurality of programme elements within the video data are defined at step S2, and classified at step S3. Programme elements will typically relate to discrete events within the video data.

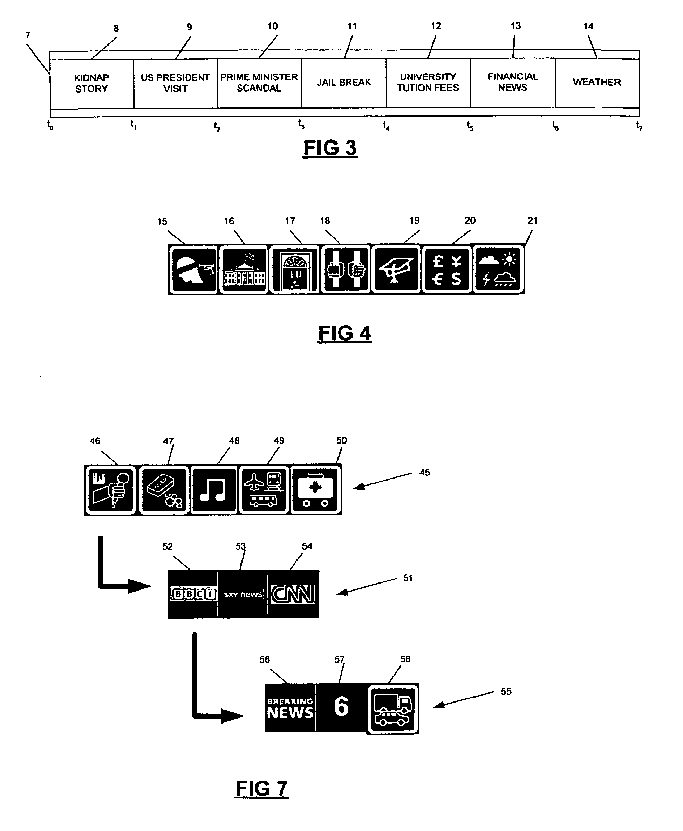

Classification of a news programme 7 is illustrated in Figure 3. The news programme extends from a time to to a time t₇. Seven discrete programme elements are defined within the news programme 7. A first programme element 8 starts at time t₀ (that is the beginning of the news programme 7), continues until time t₁ and relates to a kidnap story. A second programme element 9 extends from time t₁ and continues until time t₂. This programme element relates to a news item describing a US presidential visit. A third programme element 10 begins at the end of the second programme element 9, (that is at time t₂), continues until time t₃ and relates to a prime ministerial scandal. A fourth programme element 11 relates to a jail break, and extends from time t₃ to time t₄. A fifth programme element 12 extends from time t₄ to time t₅ and relates to university tuition fees. A sixth programme element 13 relates to financial news, and extends between time t₅ and time t₆. A seventh programme element 14 relates to weather news and extends from time t₆ to the end of the news programme 7, that is to time t₇.

Referring back to Figure 2, at step S2 an operator places markers at each of times to to t₇ to delimit the seven described programme elements illustrated in Figure 3. At step S3 each programme element is allocated to one of a predetermined plurality of classes. In this example these classes relate to content type, and more particularly to the nature of the news story represented by each programme element.

Classification of video data is also described in the applicant's published PCT patent application, (publication number WO99/03275) the contents of which are herein incorporated by reference.

Classification can suitably be carried out by an operator viewing the video data within a graphical user interface (GUI), the GUI providing a plurality of icons which can be selected to effect classification. The user selects a type of programme to be classified (in this case news) and is presented with a plurality of icons which represent programme elements expected to occur within a news programme. The video data is viewed by the operator, and as each new programme element begins, an icon representing the content of that programme element is selected (thus steps S2 and S3 of Figure 2 could be carried out concurrently). Preferred embodiments of the GUI provide an operator with functionality to offset delays in selecting an appropriate icon, as compared with the true start of a programme element. US Patent Application No. 10/435,178, filed on 9 May 2003 describes a suitable GUI, and this document is herein incorporated by reference.

The classification of each programme element described above is denoted by an appropriate icon. Figure 4 shows a sequence of icons which represent the programme elements making up the news programme 7. A first icon 15 represents the kidnap story programme element 8, a second icon 16 represents the US presidential visit programme element 9, a third icon 17'represents the prime ministerial scandal programme element 10, and a fourth icon 18 represents the jail break programme element 11. A fifth icon 19 represents the university tuition fees programme element 12, a sixth icon 20 represents the financial news programme element 13, and a seventh icon 21 represents the weather programme element 14. It can be seen from Figure 4 that the sequence of icons provides an easily understandable summary of the content of the video data. Furthermore, over time a user will become readily familiar with the various icons which are used, and will therefore almost instantly know the content type of the associated video data.

Referring back to Figure 2, having performed appropriate classification, the video server 1 is ready to accept a request from a user via the Internet for the classified video data. Such a request is received at step S4. Classification data representing a class to which each programme element within a requested programme is transmitted to a user at step S5, via the Internet 2. This data takes the form of a plurality of codes, one for each programme element, each code indicating the class to which the respective programme element has been allocated, together with a unique identifier of that programme element. The video server 1 then awaits a response from the user at step S6.

Figure 7 shows processing carried out by a user device such as the mobile telephone 6 upon receipt of classification data transmitted at step S5 of Figure 2. At step S7 the classification data is received and stored within the user device. In the described embodiment' of the invention each user device stores the plurality of icons used to represent programme element classification. These icons are suitably transmitted to the user device when no other network activity is taking place and stored. The user device processes the classification data received at step S7 and corresponding icons are retrieved from storage at step S8. Thus, if classification codes representing the programme elements of the news programme 7 are transmitted, the sequence of icons illustrated in Figure 4 will be generated, and these are displayed to the user at step S9 via a suitable display device, which will typically be a monitor in the case of the workstations 3, 4, or a built in screen in the case of the laptop computer 5 and the mobile telephone 6. A user then reviews the sequence of icons and selects one of the icons. This selection can suitably be made by moving a cursor visible on the display device using an input device such as a mouse to cause selection of one of the icons. Alternatively, the icons can be displayed on a touch sensitive screen, and selection can be effected simply by touching the screen, either with a finger, or with a provided touch pen. Indeed, as will be readily apparent to one skilled in the art, any appropriate input device can be used. User input is received at step S10 and user selection data indicative of this input is generated at step S11. This data can suitably simply comprise the unique identifier of the programme element represented by the selected icon, and is transmitted to the video server 1 at step S12. The user device then enters a loop at step S 13 until appropriate video data is received from the video

Referring back to Figure 2, on receipt of the user selection data, the loop of step S6 exits, and the received data is processed at step S14. This processing comprises locating video data identified by the unique programme element identifier contained within the user selection data. The located video data is transmitted to the appropriate user device at step S15. The video data is transmitted as one or more video data files in any convenient file format such as MPEG, RealPlayer or QuickTime, for example. Referring back to Figure 5, receipt of video data causes the loop of step S 13 to exit, and the user device can then display the video at step S16 using appropriate video player software. This software can either be a stand alone application, or alternatively can be included within the web browser software used to display the icons for user selection, or included in a web page using, for example, a Java^{™} Applet. Activation of a suitable standalone video player from a web page and inclusion of a Java^{™} applet in a web page are well known in the art, and are not described in further detail here.

In the embodiment of the invention described above, it has been assumed that icons are already present on the user device, and are retrieved using classification codes transmitted by the video server 1. In alternative embodiments of the present invention, no icons are stored on a user device in advance, but instead the video server 1 responds to a user request by providing icons together with unique programme element identifiers as described above. Transmission of icons does require slightly greater bandwidth, however this embodiment of the invention makes the described method more widely applicable to devices which do not have stored icons.

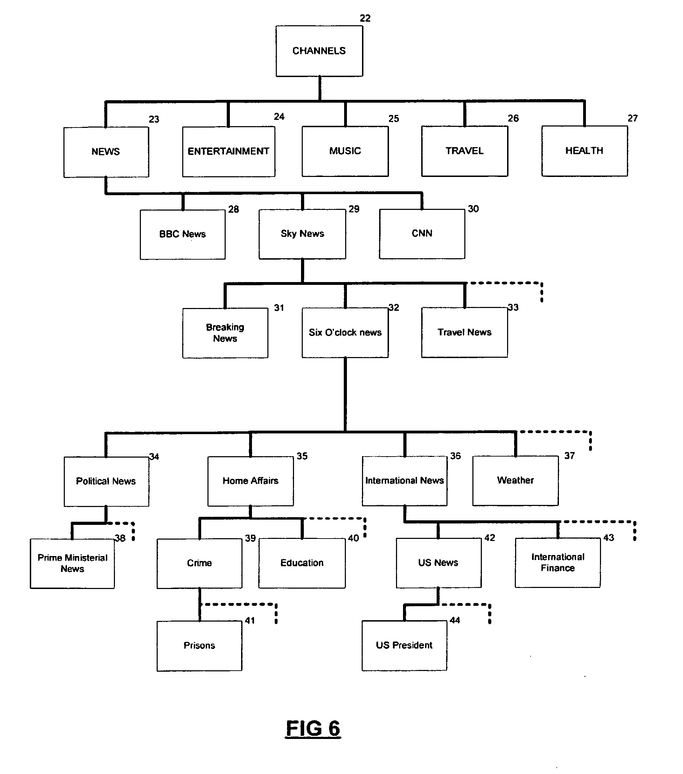

Figure 6 illustrates a hierarchy of classes which can be used for multi layer classification. In the following description the term "channel" is used to refer to a group of video data items (referred to as programmes) containing programme elements which are provided by a common source. The hierarchy of Figure 6 has a top level channels class 22 which represents the root of the classification hierarchy. The channels class 22 has five sub-classes which represent channels offering various different content types. A first sub-class 23 is used to represent news channels, a second sub class 24 is used to represent entertainment channels, a third sub-class 25 is used to represent music channels, a fourth sub-class 26 is used to represent travel channels, and a fifth sub-class 27 is used to represent health channels. Each of these sub-classes is used to represent channels of the appropriate type. The News class 23 has sub-classes representing various news channels. A sub-class 28 is used to represent a BBC news channel, a sub-class.29 is used to represent a Sky news channel, and a sub-class 3 0 is used to represent a CNN news channel.

Each of the sub-classes 28, 29, 30 in turn has sub-classes which represent programmes provided by that channel. Figure 6 illustrates three subclasses of the sub-class 29 used to represent the Sky news channel, namely a breaking news class 31, a six o'clock news class 32 and a travel news class 33. There are also illustrated subclasses of the six o'clock news class 32 which represent programme elements within that programme. Four sub-classes are illustrated: a political news class 34, a home affairs class 35, an international news class 36 and a weather class 37. Some of these classes have one or more sub-classes. Specifically. The political news class 34 has a prime ministerial news class 38 as a sub-class. The home affairs class 35 has a crime class 39 and an education class 40 as sub-classes. The crime class 39 in turn has a prisons class 41 as a sub-class. The international news class 36 has a US news class 42 and an international finance class 43 as sub-classes. The US news class 42 in turn as a class 44 representing news concerning the US president. The hierarchy of Figure 6 includes a number of paths indicated in broken lines. This is simply to indicate that further classes are provided at that level of the hierarchy, but these are not described in further detail here.

The hierarchy described with reference to Figure 6 can be used to classify data using the video server 1. As shown in Figure 4, this classification can allow video data to be classified using classes at different hierarchical levels (e.g. the education class 40 represented by the icon 19 is at a higher hierarchical level than the prisons class 41 represented by the icon 18).

In the embodiments of the invention described above, a single sequence of icons (Figure 4) has been described, in which a user selects, specific video data, and is provided with a sequence of icons representing programme elements which make up that video data. An alternative embodiment of the invention using the hierarchy of Figure 6 is now described with reference to Figure 7. A user is initially provided with a sequence of icons 45 which represent different channel types. An icon 46 represents news channels, an icon 47 represents entertainment channels, an icon 48 represents music channels, an icon 49 represents travel channels, and an icon 50 represents health channels. It can be seen that these icons correspond to similarly named classes in Figure 6.

On being presented with the sequence of icons 45 a user can make a selection so as to be presented with details of appropriate channels. In the example of Figure 7 a user selects the news icon 46. This selection is communicated to the video server 1, and in return a further sequence of data is transferred to the user device, for display to the user. This sequence of data is represented by a sequence of icons 51. The sequence of icons 51 comprises a BBC news icon 52, a Sky news icon 53, and a CNN news icon 54. Again a user selection is made and transmitted to the video server 1, data is received from the video server 1, and a further sequence of icons 55 is displayed, representing programmes provided by the selected channel. In this case it was the Sky news icon 53 which was selected, and programmes provided by the Sky news channel are represented by a breaking news icon 56, a six o'clock news icon 57, and a travel news icon 58. A user can select one of the icons 55 to cause display of icons representing programme elements. For example, if the six o'clock news icon 57 is selected, the sequence of icons shown in Figure 4 is displayed, and user interaction continues in the manner described above.

It should be noted that all embodiments of the invention described above are advantageous; given that summary information is provided to the user in the form of a sequence of icons which can be provided by transmitting minimal data. This summary data can be hierarchical as in the case of Figure 6 and 7. Video data is transmitted only when specifically requested. Furthermore, given the classification process, only a small quantity of video data of interest to the user is downloaded, meaning that users having low-bandwidth connections make economic use of that bandwidth.

It will be appreciated that he hierarchy of Figure 6 is merely exemplary, and other hierarchies could be used. For-example in some hierarchies there may be no concept of channels as described above. Instead each programme element may be classified with a hierarchy indicating only features of programme element content, regardless of source.

The embodiments of the invention described above have been concerned with classification of programme elements on the basis of programme content. In alternative embodiments of the invention, video data can be divided into programme elements, and each element can be classified on the basis of a subjective value judgment such as an interest level. A programme can then be represented by means of, for example, a sequence of icons, each icon representing an associated interest level by means of a number of stars ranging from zero to five. A user can then simply select one or more icons representing relatively interesting programme elements to cause these to be downloaded in the manner described above. Using icons representing interest level as opposed to content classification may be particularly suitable for programmes which do not have discrete content based events, but rather contain only a single content type.

Some embodiments of the invention use content based classification as described above, in combination with interest level indicators as described above.

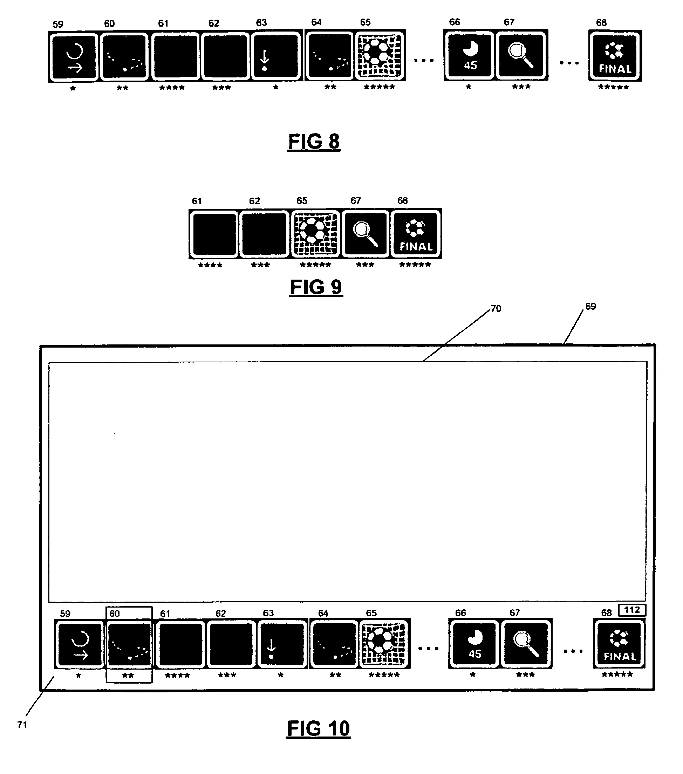

Embodiments of the invention can be used to allow a user to condense a stream of video data such that it can be viewed within a time which a user has available. Figure 8 illustrates part of a sequence of icons which represent a soccer match. Only part of the sequence of icons representing an entire soccer match is illustrated in Figure 8, with omitted icons being denoted by ellipsis. It can be seen that the soccer match is represented by a start game icon 59, a dribble icon 60, a defensive action icon 61, an offside icon 62, a free kick icon 63, a further dribble icon 64, and a goal icon 65. Icons representing the remainder of the first half of the soccer match are then omitted. Half time is indicated by a half time icon 66, and half time analysis is indicated by an analysis icon 67. Events making up the majority of the second half are denoted by ellipsis, and a final goal icon 68 denotes the end of the match. It can be seen that in the embodiment of Figure 8, each icon is presented together with an interest level indicator, denoted by a number of stars below each icon, ranging from one to five.

As described above, the stream of icons of Figure 8 can be downloaded from the video server to a user's device in advance of the video data itself. A user can then select one or more icons in order to obtain the video content associated with the selected icons.

When the stream of icons partially illustrated in Figure 8 is displayed to the user, the user may additionally be provided with a viewing duration indicative of the time taken to display the video data represented by all icons. This can be achieved by incorporating with data for each icon a time parameter indicating the viewing duration of the video data represented by that icon. Thus, in the example of Figure 8, the time for the entire soccer match, together with half time, may be of the order of 110 minutes, and this time may be displayed to the user. It may be however, that a user does not wish to expend that length of time watching an entire soccer match. Therefore, using the icon data downloaded to the user's device, it is possible to specify preferred content, and condense the video data in accordance with the preferred content.

For example, a user may input data indicating that he/she wishes only to view video data which is classified as having an interest level in excess of three stars. On making this selection, a user is then presented with a subset of the icons as illustrated in Figure 9. Specifically, only the defensive action icon 61, the offside icon 62, the goal icon 65, and the final goal icon 68 are displayed to a user. Again, the user is presented with an indication of the time taken to view all video data associated with these icons. If it is determined that the time indicated to view the video data associated with these icons is acceptable to a user, the user can then request the appropriate video data from the video server and proceed to watch the video data.

The embodiment of the present invention as described above allows a user to download icons which provide an indication of the viewing duration of the associated video data, and then to make a further specification so as to obtain a subset of icons representing a subset of video data and an indication of the (shorter) time that would be required to watch the video data represented by the subset of icons. It will be appreciated, that this embodiment of the invention need not necessarily be used in connection with a subjective value assessment as described above, but instead the sequence of icons illustrated in Figure 8 could be displayed to a user, the display time would then be determined to be unacceptable, and a user could then specify.that only goal events for example, were desired. A subset of sequence of icons representing all goal events, would then be displayed to the user together with the associated viewing duration, and the user could then proceed to watch only the goal video data in the manner described above. Alternatively, the user may specify that it is desired to view only the actual match, not pre-match and half-time discussions and interviews, and the video data could then be condensed to remove, for example, the half-time and analysis programme elements respectively represented by the icons 66, 67 in Figure 8.

The condensing process described above, is not restricted to applications in which icons are delivered in advance and then used to enable download of video data. For example, as illustrated in Figure 10, a user may review icons and watch video data concurrently. Figure 10 illustrates a display screen 69 having a first area 70 in which video data is displayed and a second area 71 in which the stream of icons illustrated in

Figure 8 is displayed. The duration of the video data is indicated in an area 72 of the display screen. Video data is displayed in the area 70, and the icon representative of the data currently being displayed is highlighted in the area 71. In the illustration of Figure 10, the icon 60 is highlighted. The user may skip backwards and forward within the video data by selecting appropriate icons in the area 71. However, if a user is running short of time and wishes to watch only the highlights of the game, an appropriate selection can be made from, for example, a menu so as to reduce the sequence of icons in the area 71 to, for example, that illustrated in Figure 9, in the manner described above.

The ability of the invention to condense video data is not restricted to video data represented using icons. For example, a user may be presented with a textual identifier identifying video data together with an estimated viewing duration for the video data. The user can then input data indicative of a wish to condense the video data, this data additionally specifying preferred programme content. In some embodiments the condensed data is then presented directly to the user, whilst in other embodiments, the condensed data is represented to the user by a further identifier, allowing a user to further condense the data prior to viewing,

In an alternative embodiment of the present invention, a user establishes a profile indicative of programme content of interest. The profile may specify a plurality of classes of data in which a user is interested, together indications of degree of interest in each specified class. This user profile can then be used to condense video data as described above. For example, a user may be presented with an identifier or icon sequence representing video data, and then request that the video data is condensed based upon the established profile by, for example, including only classes included within the profile having an interest level above a predetermined threshold.

In some embodiments of the present invention, a user presents details of a desired viewing duration. The video data is then condensed to provide video data having a duration as close as possible to the desired viewing duration. In such embodiments of the invention, a user profile can be used in the manner described above, or alternatively a user can input data indicating how condensing should be carried out.

## Claims

1. A method of generating video data, comprising:
storing video data at a server as a plurality of programme elements (59; 60; 61; ...68), each programme element being allocated to one of a predetermined plurality of classes (15; 16; 17; 18; 19; 20; 21) and each class having an interest level indicating a degree of user's interest;
receiving first input data from a client device comprising data indicating classes of said predetermined plurality of classes which are of interest to a user, and further indicating a degree of interest (*,...*****) in each of said interested classes;
retrieving programme elements (61, 62, 65, 67, 68) from said stored programme elements in accordance with the first input data;
**characterised by**:
receiving second input data from the client device indicating an approximate desired viewing duration, wherein:
programme elements are retrieved to generate video data having a viewing duration substantially equal to the desired viewing duration, said generated video data comprising only programme elements in classes having an interest level above a predetermined threshold.

2. A method according to claim 1, further comprising presenting an identifier identifying the generated video data.

3. A method according to claim 2, wherein said identifier comprises a sequence of icons representing the class to which each retrieved programme element has been allocated.

4. A method according to claim 2 or 3, further comprising displaying a viewing duration for the generated video data.

5. A method according to claim 1, wherein the class to which each retrieved programme element has been allocated is represented by an icon.

6. A method according to claim 5, further comprising receiving data from said client device indicating selection of some or all of said retrieved programme elements, and transmitting video data associated with said selected programme elements to the remote terminal.

7. A method according to claim 5 or claim 6 further comprising transmitting to said client device a viewing duration associated with said generated video data.

8. A data carrier carrying computer program code means to cause a computer to execute procedure in accordance with the method of any one of claims 1 to 7.

9. A computer apparatus for generating video data, comprising:
a program memory containing processor readable instructions; and
a processor for reading and executing instructions contained in the program memory;
wherein said processor readable instructions comprise instructions controlling the processor to carry out the method of any one of claims 1 to7;

10. A server apparatus for generating video data comprising:
storage means for storing video data as a plurality of program elements each program element being allocated to one of a plurality of predetermined classes and each class having an interest level indicating a degree of users interest;
user input means configured to receive first input data from a client device comprising data indicating classes of said predetermined plurality of classes which are of interest to a user, and further indicating a degree of interest in each of said interested classes, and
retrieving means configured to retrieve stored programme elements from said storage means in accordance with said first input data;
**characterised in that**:
the retrieving means is additionally configured to receive second input data from the client device indicating an approximate desired viewing duration and is configured to generate video data having a viewing duration substantially equal to the desired viewing duration said generated video data comprising only programme elements in classes having an interest level above a predetermined threshold.

## Patentansprüche

1. Verfahren zum Erzeugen von Videodaten, das Folgendes beinhaltet:
Speichern von Videodaten auf einem Server als eine Mehrzahl von Programmelementen (59; 60; 61; ...68), wobei jedes Programmelement einer aus einer vorbestimmten Mehrzahl von Klassen (15; 16; 17; 18; 19; 20; 21) zugeordnet ist und jede Klasse eine Interessensstufe hat, die einen Grad an Benutzerinteresse anzeigt;
Empfangen von ersten Eingangsdaten von einem Client-Gerät, die Daten beinhalten, die Klassen der genannten vorbestimmten Mehrzahl von Klassen anzeigen, die für einen Benutzer von Interesse sind, und die ferner einen Grad an Interesse (*,... * * * * *) in jeder der genannten interessierten Klassen anzeigen;
Abrufen von Programmelementen (61, 62, 65, 57, 68) aus den genannten gespeicherten Programmelementen gemäß den ersten Eingangsdaten; **gekennzeichnet durch**:
Empfangen von zweiten Eingangsdaten von dem Client-Gerät, die eine ungefähre gewünschte Betrachtungsdauer anzeigen, wobei:
Programmelemente abgerufen werden, um Videodaten mit einer Betrachtungsdauer zu erzeugen, die im Wesentlichen gleich der gewünschten Betrachtungsdauer ist, wobei die genannten erzeugten Videodaten nur Programmelemente in Klassen mit einer Interessensstufe über einer vorbestimmten Schwelle umfassen.

2. Verfahren nach Anspruch 1, das ferner das Präsentieren einer Kennung beinhaltet, die die erzeugten Videodaten identifiziert.

3. Verfahren nach Anspruch 2, wobei die genannte Kennung eine Folge von Icons beinhaltet, die die Klasse repräsentieren, der jedes abgerufene Programmelement zugeordnet wurde.

4. Verfahren nach Anspruch 2 oder 3, das ferner das Anzeigen einer Betrachtungsdauer für die erzeugten Videodaten beinhaltet.

5. Verfahren nach Anspruch 1, wobei die Klasse, der jedes abgerufene Programmelement zugeordnet wurde, durch ein Icon repräsentiert wird.

6. Verfahren nach Anspruch 5, das ferner das Empfangen von Daten von dem genannten Client-Gerät, die eine Auswahl von einigen oder allen der genannten abgerufenen Programmelemente anzeigen, und das Senden von mit den genannten gewählten Programmelementen assoziierten Videodaten zu dem Fernendgerät beinhaltet.

7. Verfahren nach Anspruch 5 oder Anspruch 6, das ferner das Senden einer mit den genannten erzeugten Videodaten assoziierten Betrachtungsdauer zu dem genannten Client-Gerät beinhaltet.

8. Datenträger, der Computerprogrammcode trägt, um einen Computer zu veranlassen, die Prozedur gemäß dem Verfahren nach einem der Ansprüche 1 bis 7 auszuführen.

9. Computervorrichtung zum Erzeugen von Videodaten, die Folgendes umfasst:
einen Programmspeicher, der prozessorlesbare Befehle enthält; und
einen Prozessor zum Lesen und Ausführen von in dem Programmspeicher enthaltenen Befehlen;
wobei die genannten prozessorlesbaren Befehle Befehle umfassen, die den Prozessor zum Ausführen des Verfahrens nach einem der Ansprüche 1 bis 7 steuern.

10. Servervorrichtung zum Erzeugen von Videodaten, die Folgendes umfasst:
Speichermittel zum Speichern von Videodaten als eine Mehrzahl von Programmelementen, wobei jedes Programmelement einer aus einer Mehrzahl von vorbestimmten Klassen zugeordnet wird und jede Klasse eine Interessensstufe hat, die einen Grad von Benutzerinteresse anzeigt;
Benutzereingabemittel, die zum Empfangen von ersten Eingabedaten von einem Client-Gerät konfiguriert sind, die Daten beinhalten, die Klassen der genannten vorbestimmten Mehrzahl von Klassen anzeigen, die für einen Benutzer von Interesse sind, und die ferner einen Grad an Interesse in jeder der genannten interessierten Klassen anzeigen, und
Abrufmittel, die zum Abrufen von gespeicherten Programmelementen aus dem genannten Speichermittel gemäß den genannten ersten Eingangsdaten konfiguriert sind;
**dadurch gekennzeichnet, dass**:
die Abrufmittel zusätzlich zum Empfangen von zweiten Eingabedaten von dem Client-Gerät konfiguriert sind, die eine ungefähre gewünschte Betrachtungsdauer anzeigen, und zum Erzeugen von Videodaten mit einer Betrachtungsdauer konfiguriert sind, die im Wesentlichen gleich der gewünschten Betrachtungsdauer der genannten erzeugten Videodaten ist, die nur Programmelemente in Klassen mit einer Interessensstufe über einer vorbestimmten Schwelle enthalten.

## Revendications

1. Procédé de génération de données vidéo, comprenant les opérations consistant à :
stocker des données vidéo au niveau d'un serveur sous la forme d'une pluralité d'éléments de programme (59 ; 60 ; 61 ; ...68), chaque élément de programme étant attribué à une classe parmi une pluralité prédéterminée de classes (15 ; 16 ; 17 ; 18 ; 19 ; 20 ; 21) et chaque classe présentant un niveau d'intérêt lequel indique un degré d'intérêt de l'utilisateur ;
recevoir des premières données de saisie en provenance d'un dispositif client comportant des données lesquelles indiquent les classes de ladite pluralité prédéterminée de classes qui ont un intérêt pour un utilisateur, et indiquent en outre un degré d'intérêt (*,...*****) pour chacune desdites classes ayant un intérêt ;
récupérer des éléments de programme (61, 62, 65, 67, 68) à partir desdits éléments de programme stockés, en conformité avec les premières données de saisie ; **caractérisé par** :
la réception de deuxièmes données de saisie en provenance du dispositif client lesquelles indiquent une durée approximative pour la visualisation souhaitée, cas dans lequel :
des éléments de programme sont récupérés pour générer des données vidéo dont la durée de visualisation est sensiblement égale à la durée de visualisation souhaitée, lesdites données vidéo générées comprenant uniquement des éléments de programme dans les classes présentant un niveau d'intérêt qui est supérieur à un seuil prédéterminé.

2. Procédé selon la revendication 1, comprenant en outre la présentation d'un identifiant lequel identifie les données vidéo générées.

3. Procédé selon la revendication 2, ledit identifiant comprenant une séquence d'icônes lesquelles représentent la classe à laquelle on a attribué chaque élément de programme récupéré.

4. Procédé selon la revendication 2 ou 3, comprenant en outre l'affichage d'une durée de visualisation pour les données vidéo générées.

5. Procédé selon la revendication 1, la classe à laquelle on a attribué chaque élément de programme récupéré étant représentée par une icône.

6. Procédé selon la revendication 5, comprenant en outre les opérations consistant à recevoir des données en provenance dudit dispositif client lesquelles indiquent une sélection de quelques-uns ou de l'ensemble desdits éléments de programme récupérés, et à transmettre des données vidéo associées auxdits éléments de programme sélectionnés vers le terminal distant.

7. Procédé selon la revendication 5 ou la revendication 6, comprenant en outre la transmission, audit dispositif client, d'une durée de visualisation associée auxdites données vidéo générées.

8. Support de données portant des moyens de code-programme informatique pour obliger un ordinateur à exécuter une procédure en conformité avec le procédé selon l'une quelconque des revendications 1 à 7.

9. Appareil informatique destiné à générer des données vidéo, comprenant :
une mémoire de programme laquelle contient des instructions lisibles par le processeur ; et
un processeur pour lire et exécuter des instructions contenues dans la mémoire de programme ;
cas dans lequel lesdites instructions lisibles par le processeur englobent des instructions de pilotage du processeur afin de réaliser le procédé selon l'une quelconque des revendications 1 à 7.

10. Appareil serveur destiné à générer des données vidéo, comprenant :
des moyens de stockage pour stocker des données vidéo sous la forme d'une pluralité d'éléments de programme, chaque élément de programme étant attribué à une classe parmi une pluralité de classes prédéterminées, et chaque classe présentant un niveau d'intérêt lequel indique un degré d'intérêt des utilisateurs ;
des moyens de saisie Utilisateur configurés pour recevoir des premières données de saisie en provenance d'un dispositif client comportant des données lesquelles indiquent les classes de ladite pluralité prédéterminée de classes qui ont un intérêt pour un utilisateur, et indiquent en outre un degré d'intérêt pour chacune desdites classes ayant un intérêt, et
des moyens de récupération configurés pour récupérer des éléments de programme stockés à partir desdits moyens de stockage, en conformité avec lesdites premières données de saisie ;
**caractérisé en ce que** :
les moyens de récupération sont configurés en outre pour recevoir des deuxièmes données de saisie en provenance du dispositif client lesquelles indiquent une durée approximative pour la visualisation souhaitée, et sont configurés pour générer des données vidéo dont la durée de visualisation est sensiblement égale à la durée de visualisation souhaitée, lesdites données vidéo générées comprenant uniquement des éléments de programme dans les classes présentant un niveau d'intérêt qui est supérieur à un seuil prédéterminé.
